# EUROPEAN PATENT APPLICATION

(11) **EP 4 299 174 A1**
(43) Date of publication of application: **03.01.2024**
(21) Application number: 22382618.1
(22) Date of filing: 30.06.2022
(51) Int. Cl.: B01J 20/10, B01J 20/12, C11B 3/10

(54) **ADSORBENT COMPOSITION WITH IMPROVED FILTRATION BEHAVIOR**

(71) Applicant: Clariant International Ltd, 4132 Muttenz (CH)
(72) Inventor: CELINSKI, Vinicius Ribeiro, 80686 München (DE); RODRIGUEZ GAYA, Carlos, 45210 Yuncos (ES); HERRERO HERNANDEZ, Jorge, 45210 Yuncos (ES); TORIBIO GARCIA, Montserrat, 45213 Palomeque (Toledo) (ES); FISCHER, Manuela, 85459 Berglern (DE)
(74) Representative: Silber, Anton

(57) **Abstract**

The present invention concerns an adsorbent composition comprising bleaching earth and a filter aid and its use in removing impurities from hard-to-treat feedstocks to improve filtration behavior while at the same time maintaining high contaminant removal, as well as a related method for purifying the feedstock.

## Description

The present invention concerns an adsorbent composition comprising a mixture of a bleaching earth and perlite and its use for improving filtration time for hard-to-treat feedstocks, especially for biofuels applications.

### Background of the Invention

Using renewable fuels has been and still is an important policy goal of governments around the world. Renewable fuels play an important role in reducing fossil fuel consumption and thus aid economies in becoming more sustainable.

One source of renewable fuel is biodiesel. Biodiesel is a form of purified alkyl esters of fatty acids generally referred to as fatty acid alkyl esters (FAAEs). Production of these FAAEs is achieved by the transesterification of animal or vegetable fats or oils or the esterification of fatty acids, including free fatty acids (FFAs) found in degraded fat or oil. The process involves reacting triacylglycerol with an alcohol, typically methanol (then leading to fatty acid methyl esters or FAME), in the presence of a catalyst (such as sodium or potassium hydroxide or methoxide), resulting in a reaction referred to as "transesterification." Alternatively, fatty acids, including those found in degraded fat or oil containing high levels of FFAs, typically referred to as "yellow grease", "brown grease", or "trap grease", are reacted with an alcohol, typically methanol, in the presence of an acid, resulting in a reaction referred to as "esterification." When using degraded fat or oil as a raw material, esterification is performed prior to transesterification in order to promote conversion of fatty acids into FAAEs. Unreacted methanol from both processes is then removed by flash evaporation so that it can be reused for subsequent esterification and/or transesterification reaction(s).

Biodiesel can also be derived from triacylglycerides (also called "triglycerides"), which may be obtained from both plant sources and animal fat sources, such as, for example, soybean oil, rapeseed oil, palm oil, coconut oil, corn oil, cottonseed oil, mustard oil, used cooking oils, float grease from wastewater treatment plants, animal fats, such as beef tallow and pork lard, soapstock, crude oils, "yellow grease" (i.e., animal or vegetable oils and fats that have been used or generated as a result of the preparation of food by a restaurant or other food establishment that prepares or cooks food for human consumption with a free fatty acid content of less than 15%), and "white grease" ,which is rendered fat, derived primarily from pork, and/or other animal fats having a maximum free fatty acid content of 4%.

Hydrotreating is an alternative process to esterification to produce renewable fuels from biomass, generally leading to hydrotreated vegetable oils (HVO). HVO are commonly referred to as renewable diesel or green diesel to distinguish from Fatty Acid Methyl Esters (FAME), best known as biodiesel. Other acronyms are also used depending on the feedstock, such as Rape Seed Methyl Ester (RME), Soybean Methyl Ester (SME), Palm Oil Methyl Ester (PME) or Used Cooking Oils Methyl Ester (UCOME).

In the HVO production process, hydrogen is used to remove the oxygen from the triglycerides and does not produce any glycerol as a side product. Additional chemicals, like methanol for FAME production, are not needed. Hydrogenation removes all oxygen from the vegetable oils while esterification does not.

Both FAAE (and in particular FAME) and HVO production processes use intermediates generated from natural gas, i.e., hydrogen for HVO and methanol for FAAE (FAME). Figures published by the Renewable Energy Directive 2009/28/EC (RED) show that life cycle greenhouse gas emissions of HVO are slightly lower than those of FAME if both are made from the same feedstock.

The quality of FAAE (especially FAME) is known to depend on the properties of the feedstock and this limits what feedstocks may be used in cold climates. In general, the feedstock used in the HVO process can be of the same or lower quality than that of the biodiesel (FAAE, FAME) process. A slight disadvantage of the HVO process lies in the feedstock sourcing. Although the range of potential raw materials is wide, there is a long list of parameters that need to be tested to avoid damages to the production plant.

Properties of HVO have much more similarities with high quality sulphur-free fossil diesel fuel than with FAAE and FAME. As a matter of fact, the properties of renewable diesel are very similar to the synthetic gas-to-liquid (GTL) diesel fuels. Also, the same analytical methods as used with fossil fuels are valid for renewable diesel.

However, simply performing the esterification and/or transesterification of fatty acids or hydrotreating vegetable oils are not enough to produce a usable biofuel. The products of the FAAE, FAME and HVO processes contain impurities that can crystallize, foul engines, and cause numerous problems for the user. As a result, regulations have been developed to address the quality assurance needs of the consumer. Strict standards for commercial biofuels have been developed by the governments of most countries, including the U.S. Government in ASTM International's ASTM D6751 and the European Union by the European Committee for Standardization in EN 14214.

As a result of the above-described transesterification reaction, two products are produced: fatty acid alkyl esters (FAAEs) (typically Fatty Acid Methyl Esters (FAMEs)) and glycerin. The glycerin portion is separated from the FAAE portion, either by centrifugation or gravity settling, and the resulting FAAEs are often referred to as "crude biodiesel." The crude biodiesel portion consists of FAAEs containing impurities that must be removed before it can be commercially marketed as biodiesel. These impurities include, but are not limited to, alcohol, glycerin, soaps, residual catalysts, metals, free fatty acids, sterol glycosides as well as other impurities that reduce the stability of biodiesel. Therefore, at this point in the process, the FAAEs cannot be commercially marketed as biodiesel until the proper specifications (e.g. ASTM D6751, EN 14214, and the like) are achieved. Similar issues exist with crude renewable diesel obtained from the HVO process.

WO2021/127413 (Imerys) addresses the problems associated with the (cold weather) performance of biodiesel. In biodiesel, precipitation of solids can occur at lower temperatures. It is believed that the major impurities that contribute to this undesirable precipitation include sterol glucosides and saturated monoglycerides. This precipitation can lead to filters clogging and vehicles malfunctioning. WO2021/127413 addresses this shortcoming by removing plant-based impurities such as sterol glucosides and/or saturated monoglycerides either partially or completely by adsorption using perlite as a filter aid material.

Zafisah et al. (Desalination and Water Treatment (2018), 110, 362-370) suggest a cake filtration process to treat palm oil mill effluent (POME). POME is a hard-to-treat feedstock, in this case a highly polluted wastewater, that requires proper treatment before it can be safely discharged to the environment. POME in general is treated with a closed anaerobic digester tank which is used to entrap methane gas prior undergoing downstream treatment. The digestate discharged from the tank contains abundance of nutrients that can be potentially recovered and reused as organic fertilizer. However, the digestate contains a high amount of suspended solids that may disrupt the downstream nutrient recovery process. Zafisah et al. use different types of filter aids such as perlite, diatomaceous earth, bleaching earth, powdered activated carbon and boiler ash in a cake filtration process to remove suspended solids in anaerobically digested POME. It was found that perlite achieved the highest suspended solids removal combined with the highest filtration flux at the end of the process. This is attributed to the presence of fine pores on perlite and its narrow particle size distribution, resulting in the formation of a homogeneous cake layer that succeeded in retaining the suspended solids. Zafisah et al. did not test or suggest mixtures of different adsorbent materials.

US5229013 (R. R. Regutti) discloses a filter material for use in treating edible oils, especially used cooking oil (UCO). The filter material preferably is a clay material (such as smectite, beidelite, montmorillonite, dioctahedral vermiculite, trioctahederal vermiculite, illite, saponite, hectorite, bentonite, muscovite, celadonite, and leucophylit) mixed with water and silica particles (such as metal silicates including magnesium silicate and calcium silicate, perlite, pumicite, rhyolite, volcanic ash, silica gel, vermiculite, and diatomaceous earth). The mixture contains between 10 and 55 % (w/w) of clay, between 10 and 85 % of silica, and between 5 and 35 % (w/w) of water. The clay can be natural and acid activated. The silica particles have two functions, namely, to separate the clay to permit proper hydration and to absorb additional impurities from the oil.

There is a continuing need for alternative and/or improved adsorbent compositions that are able to reliably remove impurities and/or contaminants from feedstocks and related processes that improve filtration behavior of the adsorbent after its use while not compromising on the impurities or contaminant removal performance. This unmet need has in particular been identified at biofuels refineries. There, for purifying hard-to-treat waste feedstocks, i.e., removing impurities (i.e., metals) below certain threshold limits for hydrotreated vegetable oil (HVO; also known as renewable diesel or green diesel) and/or fatty acid methyl ester (FAME; also known as biodiesel), processes using adsorbents that effectively remove contaminants while at the same time avoiding issues at the filtration stage are key.

It is an objective of the present invention to provide a suitable adsorbent composition for use in treating hard-to-treat feedstocks so that the shortcomings of the prior art approaches are overcome.

This and other objectives of the invention are solved by the subject matter of the independent claims. Further and preferred embodiments of the invention are the subject matter of the dependent claims.

A first object of the invention is an adsorbent composition comprising a mixture of bleaching earth and perlite. The mixture comprises from 3 to 25 % (w/w) of perlite, and from 75 to 98 % (w/w) of bleaching earth.

In the context of the present invention, a mixture of bleaching earth and perlite can be any physical mixture or blend of these materials. Such physical mixtures are prepared before adding the adsorbent composition to the feedstock (pre-mix). This allows providing an optimized, homogenous, and ready-to-use mixture. It also requires minimum storage and dosing apparatuses on the site of its use (e.g., in a biodiesel refinery etc.)

A bleaching earth (BE) is produced by crushing, grinding, drying, milling and optional other intermediary activation processes, including wet and dry methods using weak and strong acids, applied to raw clay from mine deposits. Suitable raw clays include phylosilicates, and in particular sepiolite, attapulgite, smectite, beidelite, montmorillonite, dioctahedral vermiculite, trioctahederal vermiculite, illite, saponite, hectorite, bentonite, muscovite, celadonite, and leucophylit.

Suitable types of bleaching earth (BE) include naturally activated bleaching earth (NABE, such as e.g. Tonsil^{®} Standard 575, obtainable from Clariant, dry modified acid-activated bleaching earths (DMBE, such as e.g. Tonsil^{®} Optimum 278FF, obtainable from Clariant), surface modified bleaching earths (SMBE, such as e.g. Tonsil^{®} Supreme 112FF, obtainable from Clariant), and high performance bleaching earths (HPBE, such as e.g. Tonsil^{®} Optimum 210 FF, obtainable from Clariant), and mixtures of two or more of these types of BE. Such types of BE are generally known in the art and are commercially available, e.g. from Clariant, in a wide variety of grades and for different applications.

The main difference between each type of BE can be found in their bleaching activity and physical parameters. NABEs are produced only by physical processing and are pH neutral. DMBE are chemically modified with weak acids (such as citric acid). SMBE are chemically activated using strong acid (such as concentrated mineral acid, e.g., sulfuric acid or hydrochloric acid) to significantly modify their surface for higher activity. HPBE are completely activated earths chemically activated with a strong acid in a reactor to significantly modify mineral structure and obtain the highest activity.

The use of one type or another, including its blend(s), is mainly defined by the type of feedstock (e.g. oil) to be refined and the desired specifications of the process, being NABEs used for more easy-to-bleach oils or oils that are susceptible to undesired side reactions that might occur with acidic clays such as palm oil, while DMBE is also suitable for easy-to-bleach oils like sunflower oil, and SMBE and HPBE are more suitable for difficult-to-bleach oils like rapeseed, soybean and waste oils such as animal fat or used cooking oil. In particular for treating waste feedstocks, SMBE and HPBE have proven to be useful. Depending on the specific needs (feedstock type, contaminants/impurities to be removed) different bleaching earths or mixtures of BEs can be preferred.

In one embodiment of the invention the adsorbent material comprises a mixture of different BE and/or a mixture of different perlites. This allows adjusting the final properties of the adsorbent composition.

Perlite is an amorphous volcanic glass that has a relatively high water content, typically formed by the hydration of obsidian. It occurs naturally and has the unusual property of greatly expanding when heated sufficiently. Rapidly heating perlite ore to temperatures of about 900°C softens the volcanic glass causing entrapped water molecules in the rock to turn to steam and expand the particles. Crushed expanded perlite particles present a maze of microscopic pathways that can be used to filter and clean a wide array of liquids (including vegetable oil), beverages, and pharmaceutical products. The expanded particles that result are actually clusters of minute, lightweight, insulating, glass bubbles. Sophisticated manufacturing techniques allow the expansion and collection of individual perlite bubbles, which are used as fillers or extenders for a wide variety of products.

Perlite is commercially available in numerous forms and from multiple sources, e.g., from Nordisk, Dicalite, Pull, Imerys and others. The perlite suitable for the adsorbent composition of the invention is typically selected from the group of expanded perlites. It has turned out that key properties of the perlite types suitable for the invention include permeability (to ensure high filtration rate), bulk density (higher bulk densities favor the mixing with clay products), chemical inert properties (imparting no chemical change to feedstocks being filtered), and being virtually insoluble in mineral and organic acids at all temperatures.

It has turned out that in particular Expanded Perlite 30 SP (available from Nordisk) and Expanded Perlite MF 300 AD (available from Minafil) are suited for hard-to-treat feedstock purification as part of the adsorbent composition of the invention.

The adsorbent composition of the invention comprises 2% (w/w) to 25% (w/w) of perlite and 75% (w/w) to 98% (w/w) of bleaching earth. Increasing the perlite content, significantly improves filtration rates for hard-to-treat feedstocks. However, increasing the perlite content in the adsorbent composition negatively influences the metal and other contaminant (P, S) removal capacities which becomes more prominent with increasing perlite content. The optimum perlite content in the adsorbent of the invention is somewhere above 2% perlite (onset of filtration improvements) and 30% perlite (inacceptable deterioration of metal and contaminant removal), ideally between 2% and 25% perlite, and preferably between 5% and 20% perlite.

A second object of the invention is the use of the adsorbent composition of the invention for improving filtration time in hard-to-treat (that is hard to filter) feedstock refining processes.

Examples of hard-to-treat feedstocks (also referred to as difficult-to-refine feedstocks) are feedstocks for the production of biogas, in particular including those described and defined in Annex IX of the EU Renewable Energy Directive (RED II) [https://www.europex.org/eulegislation/renewable-energy-energy-directive/]:
- Algae if cultivated on land in ponds or photobioreactors
- Biomass fraction of mixed municipal waste
- Biowaste from private households
- Biomass fraction of industrial waste, including material from retail and wholesale and the agro-food and fish and aquaculture industry
- Straw
- Animal manure and sewage sludge;
- Palm oil mill effluent and empty palm fruit bunches;
- Tall oil pitch;
- Crude glycerine;
- Bagasse;
- Grape marcs and wine lees;
- Nut shells;
- Husks;
- Cobs cleaned of kernels of corn;
- Biomass fraction of wastes and residues from forestry and forest-based industries, including, bark, branches, pre-commercial thinnings, leaves, needles, tree tops, saw dust, cutter shavings, black liquor, brown liquor, fibre sludge, lignin and tall oil;
- Other non-food cellulosic material;
- Other ligno-cellulosic material

Further examples of hard-to-treat feedstocks (also referred to as difficult-to-refine feedstocks) are feedstocks for the production of biofuels and biogas for transport, in particular including those described and defined in Annex IX of the EU Renewable Energy Directive (RED II) [https://www.europex.org/eulegislation/renewable-energy-energy-directive/]:
- Used cooking oil;
- Animal fats

Since such hard-to-treat feedstocks are often complex mixtures of several components and are difficult to describe in a complete fashion, for the purpose of the present invention feedstocks are considered to be hard-to-treat (that is hard to filter) if they show a filtration rate (according to the below standard test method) of 60 s or more.

The feedstock according to the invention can also be a two or multi-component mixture of different individual feedstock species. While one component is a hard-to-treat feedstock, the other component(s) of such feedstock mixtures can also be hard-to-treat feedstock(s) and/or more easy to treat feedstocks such as vegetable oil etc.

In particular, the feedstock is selected from the group containing used cooking oil (UCO), palm oil mill effluent (POME), animal fat, fatty acid distillates (FAD), spent bleaching earth oil (SBEO), tall oil and mixtures thereof.

Another object of the invention is a method for removing impurities from a hard-to-treat feedstock, comprising
a) providing the feedstock
b) optionally pre-heating the feedstock
c) optionally pre-treating the feedstock
d) adding the adsorbent composition of the invention to the feedstock
e) heating the feedstock/adsorbent composition mixture
f) filtering the feedstock/adsorbent composition mixture to remove the adsorbent composition
g) collecting the purified feedstock.

The method of the invention is in particular suited for refining hard-to-treat feedstocks like used cooking oil (UCO), palm oil mill effluent (POME), animal fat, fatty acid distillates (FAD), spent bleaching earth oil (SBEO), tall oil and mixtures thereof

The optional steps b) and c) of the method of the invention are used depending on the specific type of feedstock used. Pre-heating the feedstock to 50 to 70 °C, preferably around 60 °C, helps to keep the feedstock liquid and homogenized. Pre-treating the feedstock by, e.g., adding degumming agents like citric acid and/or water or the like and heating the feedstock to temperatures above 70 °C supports contaminant and gum removal and thus helps to improve the refined feedstock quality. Other pre-treatment steps could involve washing, soft neutralization etc.

The adsorbent composition of the invention is added in step d) in an amount sufficient to achieve the desired metal and other contaminant removal from the feedstock. Typically, less than 2 % (w/w) of adsorbent are added to the feedstock, preferably 1 % or less is added.

The temperature during the heating step e) is typically maintained at least at 80 °C, preferably at least 100 °C. To support the contaminant removal, heating step e) can preferably be carried out under mild vacuum conditions (such as at a pressure of 100 mbar or less, preferably at 60 mbar or less) - although the heating step can also be done under ambient pressure conditions - or a combination of both in 2 different and consecutive steps. A person of skill in the art will understand that ensuring the right contact time between feedstock and adsorbent and providing the optimum amount of adsorbent per amount of feedstock are important.

Filtering step f) can be done in any suitable form, known to the person of skill in the art. Preferably, filtering is done on vertical pressure leave filters (so called Niagara filters) where the adsorbent behaves as the filter media itself while creating a cake over a filter mesh (usually PZ 80 or 24x110 mesh). Alternative filter methods involve plate and frame pressure filters, candle filters and rotary filters.

The present invention provides for an improved adsorbent composition with uncompromised bleaching/adsorbent performance, in particular when used with difficult to refine feedstocks, so-called hard-to-treat feedstocks, while at the same time improving the filterability of the adsorbent after use to allow quick and complete removal of the adsorbent from the refined feedstock after refining.

### Examples

The invention and its benefits will further be explained by the following experimental examples.

The following analytical methods have been used:
Metals and other contaminants like phosphorus (P) in the bleached oil are determined by calibrated Inductively Coupled Plasma (ICP) spectroscopy. Samples are prepared blending the oil with kerosene and an internal standard with the same ratio. Then, the samples are injected in the ICP for concentration measurement that together with concentration ratio used in calibration and weight of the sample, final results are obtained.

Bulk density was determined under a normal fill, without pressing or shaking the material. Approximately 250 g of air-dry material is shaken in a 1000 ml container for one minute so that the sample will no longer contain any mechanically compacted particles. The measuring cylinder which has been cut at the 100 ml graduation is weighed (empty weight) and placed under the powder funnel which is fixed at the stand (distance appr. 2 cm). After the stopwatch is started, the measuring cylinder is filled within a period of 15 seconds with the ventilated material of the 1000 ml container. While the stopwatch continues to run (total period: 2 minutes) the same quantity of material is refilled so that the cylinder is always filled slightly supernatant. Subsequently, the supernatant material is taken from the top edge of the measuring cylinder by a spatula. Care has to be taken so that the material will not be subject to any press forces. The filled measuring cylinder is cleaned by using a brush and is weighed.

Free moisture is the amount of water (%w/w) contained in the adsorbents determined at 105 °C according to DIN/ISO-787/2.

pH is determined from a 10 wt.-% slurry of the adsorbent material in distilled water which is heated to the boiling point and then cooled to room temperature under a nitrogen atmosphere. The pH-value is determined with a calibrated glass-electrode.

Specific surface was measured by the BET-method (single-point method using nitrogen, according to DIN 66131) with an automatic nitrogen-porosimeter of Micrometrics, type ASAP 2010. The pore volume was determined using the BJH-method (E.P. Barrett, L.G. Joyner, P.P. Hienda, J. Am. Chem. Soc. 73 (1951) 373).

Particle size has been determined using a HOSOKAWA ALPINE Air Jet Sieve Shaker with a set of sieves with 25, 63 and 150 µm pores. 5 g of sample material have been placed on the sieve and the weight of the residue after 3 min of shaking (7 min for the 25 µm sieve) was recorded and is given in % of the initially added sample material (w/w).

Particle size distribution (PSD) has been measured by laser diffraction (XRD) using a Malvern device with 5 g of sample material.

The following standard test methods have been used:

### Filtration rate

The filtration rate is determined by suctioning an adsorbent oil/feedstock suspension by means of a vacuum filtering apparatus.
10 g of Tonsil Supreme 111 bleaching earth (standard adsorbent available from Clariant) is added to 100 g of the feedstock to be evaluated and the resulting suspension is heated to 96.5 ºC and stirred for 10 min at appr. 280 rpm. The feedstock/adsorbent suspension is then vacuum filtered using a GV 100 suction filter with perforated screen plate (Schleicher & Schüll) and round filter (diameter 100 mm; Munktell grade 3hw, 65 g/m²) applying a 50 mbar vacuum suction. With the first drop of oil/feedstock dropping off the suction filter's bottom a stopwatch is started. As soon as the filter cake has a dry appearance on the whole surface, time measurement is stopped. The measured time value is considered to be the filtration rate.

To test the filtration rate of feedstocks so as to determine if a feedstock is hard-to-treat, the above method is used as described, i.e. including using the Tonsil Supreme 111 bleaching earth as adsorbent. With this method, easy-to-treat feedstocks like standard quality olive oil and crude palm oil (CPO) show filtration rates of ∼35 s and ∼50 s, respectively, while hard-to-treat feedstocks show considerably higher filtration rates (animal fats typically >90 s, palm oil mill effluent (POME) typically >360 s, blends of 60 % used cooking oil (UCO) and CPO (40 %) typically >130 s, blends of 60 % CPO and 40 % POME of 150 s or more).

The same test principle has been used also to test the filtration rate of specific adsorbent composition/feedstock combinations as given in the below examples.

### Oil retention

After the filtration rate has been determined as described above, the filter cake is allowed to drain for another 5 min under vacuum. Subsequently, the filter cake is withdrawn from the round filter. Its weight is determined by means of an analytical balance. The oil retention is obtained by determining the relative weight difference of the filter cake containing the oil versus the original weight of BE used in the experiment.

### Three-step filtration test

For evaluating filtration behaviors of adsorbents (BE and/or perlite), a method was designed to replicate industry filtration conditions. The method uses a stainless-steel pressure filtration unit (No. 16249 from Sartorius), heated at 95ºC with a wristband with integrated temperature sensor (PT-100 from Horst) and a temperature controller (LTR 3500 Juchheim Solingen). The reactor is operated under positive pressure using an air compressor controlled with a manometer. Filter cloth consists of a glass fiber filter (GF/F Ø47mm).

Three beakers with 100g of crude feedstock are heated up to 96,5ºC in a bath, 2g of adsorbent is added in each beaker and after complete sedimentation the mixture is stirred for 10 min. After mixing, one of the beakers is taken out and quickly transferred into the filter reactor, then pressure is opened, and time is measured when feedstock starts to filter until it finishes, representing the pre-coating process (T1).

Then, without taking out the generated spent adsorbent, pressure is stopped, and the second beaker is added to repeat the same process considering there is still a cake formed (T2). Finally, the process is repeated with the last beaker once the final cake is formed (T3) to complete the test.

### Refining Process (pretreatment and bleaching):

Pretreatment: 100 g of feedstock (pre-heated to 60 °C to keep it liquid and homogenized) is stirred at 250 rpm and heated up to 80 ºC. Then 0.7 % citric acid solution (20% w/w) and 0,15% (w/w) distilled water are added and the resulting mixture is maintained at 80 ºC for 10 min at atmospheric pressure.

Bleaching: After the pretreatment, 0.8 or 1.0 % (w/w) of adsorbent (bleaching earth and/or perlite; as indicated in the examples) is added and the resulting feedstock/adsorbent mixture is further stirred at 250 rpm at 80 ºC for 10 min and atmospheric pressure. Then, the feedstock/adsorbent mixture is heated to 100 °C under a vacuum of 100 mbar. The mixture is stirred for 30 min at 250 rpm and 60 or 100 mbar vacuum (as indicated in the examples). The bleached feedstock is then filtered and tested for metals and other contaminants.

Percentages given are weight-% (w/w) - if not indicated differently.

### Example 1:

To test if an adsorbent composition comprising a mixture of bleaching earth and perlite shows filtration improvements without affecting bleaching/metal removal performance in hard-to-treat feedstocks, such a type of feedstock consisting of 62.2% crude palm oil (CPO), 32,4% used cooking oil (UCO) and 5.4% palm oil mill effluent (POME) was subjected to the above described pre-treatment (adding 0.7% citric acid solution (20%) and 0.15% water and heating for 10 min at ambient pressure to 80 °C) and bleaching (0.8% adsorbent dosage and heating for 30 min at a pressure of 60 mbar to 100 °C) steps to determine the metal and other contaminant removal behaviour in the refining process. To test the filtration rate, the same feedstock/adsorbent combination (10 g adsorbent composition per 100 g of feedstock) was subjected to the filtration rate determination, as described above. Another part of the same feedstock/adsorbent combination was subjected to the above 3-step filtration test. The results, both of the refining and of the filtration performance tests for the adsorbent composition of the invention (here using 90% bleaching earth and 10% perlite) were compared to those obtained with pure bleaching earth, i.e., without adding perlite.

Characteristics of the bleaching earth are summarized in Table 1:

**Table 1**

| Bleaching Earth | Bulk density (g/l) | Moisture (%) | pH | Particle size > 63 µm (%) | Surface area (m²/g) |
|---|---|---|---|---|---|
| Tonsil 9194 FF (Clariant) | 500 | 12 | 2,6 | 34 | 190 |

Characteristics of the perlite are summarized in Table 2:

**Table 2**

| Perlite | Bulk density (g/l) | Moisture (%) | pH | Average particle size (µm) |
|---|---|---|---|---|
| Perlite 30 SP (Nordisk) | 90-120 | 0.1 -0.4 | 6.5 - 7.9 | 58 |

The results of the refining process are given in Table 3 where the metal and other contaminant (P, S, Si) content (in ppm) of the untreated feedstock ("None") are compared with the refined feedstock treated with BE only ("BE", comparative example) and with the BE/perlite adsorbent composition ("BE/Per") according to the invention:

**Table 3**

| | Al | B | Ba | Ca | Cr | Cu | Fe | K | Mg | Mn | Mo | Ni | P | Pb | S | Si | Sn | Zn |
|---|---|---|---|---|---|---|---|---|---|---|---|---|---|---|---|---|---|---|
| None | 0.52 | 0.9 | 0.1 | 9.5 | <0.05 | 0.1 | 4.4 | 7.0 | 2.9 | 0.3 | <0.1 | 0.1 | 13.1 | <0.3 | 6.6 | 1.6 | 0.4 | 0.4 |
| BE | 0.21 | 0.10 | <0.03 | 2.20 | <0.05 | 0.07 | 1.80 | 0.40 | 1.70 | 0.16 | <0.1 | <0.02 | 3.90 | <0.3 | 2.60 | 1.00 | 0.33 | 0.22 |
| BE/Per | 0.23 | 0.10 | <0.03 | 2.40 | <0.05 | 0.07 | 1.90 | 0.40 | 1.60 | 0.15 | <0.1 | <0.02 | 4.10 | <0.3 | 2.60 | 0.50 | 0.33 | 0.21 |

The results in Table 3 demonstrate that although pure perlite basically has no to very low metal and other contaminant removing effect on feedstocks (as shown below in Example 3), the refining capacity of the adsorbent composition of the invention is substantially uncompromised compared to pure bleaching earth.

Table 4 gives the results of the filtration rate measurements for the feedstock/adsorbent combinations tested (i.e., with BE only ("BE", comparative example) and with the BE/perlite adsorbent composition ("BE/Perlite") according to the invention):

**Table 4**

| | BE (100%) | BE/Perlite (90%/10%) |
|---|---|---|
| Filtration rate (s) | 136 | 102 |

The results in Table 4 indicate that in a simple filtration experiment the filtration rate of the adsorbent composition of the invention is 25% faster that for BE only.

Table 5 gives the results of the three-step filtration test for the feedstock/adsorbent combinations tested (i.e., with BE only ("BE", comparative example) and with the BE/perlite adsorbent composition ("BE/Perlite") according to the invention):

**Table 5**

| | BE (100%) | BE/Perlite (90%/10%) |
|---|---|---|
| T1 Filtration time (s) | 163 | 71 |
| T2 Filtration time (s) | 389 | 251 |
| T3 Filtration time (s) | 545 | 329 |
| Total filtration time (s) | 1097 | 651 |

The results in Table 5 indicate that in a complex filtration experiment the filtration time of the adsorbent composition of the invention is substantially shorter in every step and the total filtration time is more than 40% faster that for BE only.

### Example 2

The experiments of Example 1 were repeated, however using a different hard-to-treat feedstock consisting of 49% crude palm oil (CPO) and 51% palm oil mill effluent (POME). Process conditions and adsorbents used are identical to those described in Example 1.

The results of the refining process are given in table 6 where the metal and other contaminant (P, S, Si) content (in ppm) of the untreated feedstock ("None") are compared with the refined feedstock treated with BE only ("BE", comparative example) and with the BE/perlite adsorbent composition ("BE/Per") according to the invention:

**Table 6**

| | Al | B | Ba | Ca | Cr | Cu | Fe | K | Mg | Mn | Mo | Ni | P | Pb | S | Si | Sn | Zn |
|---|---|---|---|---|---|---|---|---|---|---|---|---|---|---|---|---|---|---|
| None | 1.31 | 1.9 | <0.03 | 24.0 | <0.05 | 0.1 | 21.0 | 7.0 | 4.2 | 0.7 | <0.1 | 0.1 | 19.2 | <0.3 | 5.8 | 3.1 | 0.8 | 0.5 |
| BE | 0.67 | 0.10 | <0.03 | 6.40 | <0.05 | 0.06 | 4.80 | 1.20 | 2.10 | 0.30 | <0.1 | <0.02 | 4.30 | <0.3 | 2.50 | 1.30 | 0.40 | 0.20 |
| BE/Per | 0.68 | 0.10 | <0.03 | 6.90 | <0.05 | 0.07 | 5.00 | 1.30 | 2.10 | 0.30 | <0.1 | <0.02 | 4.40 | <0.3 | 2.50 | 0.60 | 0.40 | 0.17 |

The results in Table 6 demonstrate that although pure perlite basically has no to very low metal and other contaminant removing effect on feedstocks (as shown below in Example 3), the refining capacity of the adsorbent composition of the invention is substantially uncompromised compared to pure bleaching earth.

Table 7 gives the results of the filtration rate measurements for the feedstock/adsorbent combinations tested (i.e., with BE only ("BE", comparative example) and with the BE/perlite adsorbent composition ("BE/Perlite") according to the invention):

**Table 7**

| | BE (100%) | BE/Perlite (90%/10%) |
|---|---|---|
| Filtration rate (s) | 150 | 121 |

The results in Table 7 indicate that in a simple filtration experiment the filtration rate of the adsorbent composition of the invention is 20% faster than that for BE only.

Table 8 gives the results of the three-step filtration test for the feedstock/adsorbent combinations tested (i.e., with BE only ("BE", comparative example) and with the BE/perlite adsorbent composition ("BE/Perlite") according to the invention):

**Table 8**

| | BE (100%) | BE/Perlite (90%/10%) |
|---|---|---|
| T1 Filtration time (s) | 193 | 81 |
| T2 Filtration time (s) | 349 | 262 |
| T3 Filtration time (s) | 625 | 349 |
| Total filtration time (s) | 1167 | 692 |

The results in Table 8 indicate that in a complex filtration experiment the filtration time of the adsorbent composition of the invention is substantially shorter in every step and the total filtration time is more than 40% faster than that for BE only.

Conclusion from Examples 1 and 2: The adsorbent composition of the invention shows a remarkable and unexpected filtration performance improvement while maintaining similar metal and other contaminant (P, S, Si) removal performance as BE only, despite adding 10% perlite to the mixture and thus effectively reducing the available BE by 10%.

### Example 3

To test how using the adsorbent composition of the invention (i.e., a pre-mix of BE and perlite applied to the feedstock sample) compares to the step-wise addition of perlite and BE, a combined filtration and turbidity test was used. For the filtration test, the same equipment and conditions as for the 3-step filtration test described above were used, but instead of the glass fiber filter, a pz80 metal sieve was used. After heating and stirring the feedstock/adsorbent mixture (10 g adsorbent in 100 g oil at 96.5ºC; ambient pressure; stirred at 280 rpm), it is filtered through the metal sieve and - without removing the filter cake - it is recirculated two more times. Turbidity and filtration time are measured for each cycle.

In the comparative example, first the corresponding amount of perlite (1 g = 10% of 10 g adsorbent dosing) is added and filtered after 5 min of treatment (T=96.5ºC; ambient pressure; stirred at 280 rpm). The filter cake is left for the subsequent filtration step after the corresponding amount of BE (9 g = 90% of 10 g adsorbent dosing) has been added to the feedstock for the bleaching step (10 min at 96.5 °C and ambient pressure; stirred at 280 rpm). This is then compared to an experiment according to the invention in which - instead of the step-wise addition of first the perlite part and then the BE part - a pre-mix of BE and perlite (same total amount, same BE/perlite ratio) is added to the feedstock.

The filtration times for the first and second cycles for the pre-mix of BE and perlite (according to the invention) were 87 s and 158 s, respectively. For the separately dosed perlite and BE experiment (comparative example), the values were 106 s and 182 s, respectively.

Accordingly, the overall filtration time of the separately dosed perlite and BE experiment (288 s) was 18% higher than that for the use of the BE/perlite pre-mix according to the invention (243 s), indicating a more permeable filter cake for the BE/perlite pre-mix which is beneficial for commercial applications.

Also, turbidity (Formacine Turbidity Units (FTU) measured using a turbidimeter (Hanna Instruments HI98703-01)) of the effluent of the separately dosed perlite and BE experiment (after the first filtration step FTU was 13.7 and after the second 2.5) was lower than that observed for the BE/perlite pre-mix according to the invention (after the first filtration step FTU was 15.5 and after the second 3.2). The slightly higher turbidity values for the BE/perlite pre-mix indicate that the filter allows small particles to pass and is not clogging too quick, indicating that the filter cake is not collapsing too fast. This is confirmed by visual inspection of the filter cakes: while the filter cake obtained in the separately dosed perlite and BE experiment is compact and hard to release from the filter apparatus, the filter cake obtained for the BE/perlite pre-mix according to the invention is less compact and thus more permeable and easier to release from the filter apparatus.

### Example 4

To test the suitability of different types of perlite as filter aid and contaminant adsorbent in hard-to-treat feedstocks, perlites have been used in experiments with such a type of feedstock consisting of 100% used cooking oil (UCO). This feedstock was subjected to the above-described pre-treatment (adding 0.7% citric acid solution (20%) and 0.15% water and heating for 10 min at ambient pressure to 80 °C) and bleaching (1% perlite dosage and heating for 30 min at a pressure of 60 mbar to 100 °C) steps. The same feedstock/adsorbent combinations were subjected to the above 3-step filtration test. The results of the refining and the filtration performance tests for the different types of perlite are given below.

Characteristics of the tested perlites are summarized in Tables 9 and 10:

**Table 9**

| Perlite Type (Source) | Oil retention (wet) (%) | Dry sieve residue (%) 150 / 63 /25 µm | | | Bulk density (g/l) |
|---|---|---|---|---|---|
| Perlite 30 SP (Nordisk) | 55.9 | 6.7 | 27.4 | 67.1 | 108.5 |
| Perlite MF 300 AD (Minafil) | 47.2 | 5.7 | 28.3 | 68 | 161 |
| Perlite 4108 (Dicalite) | 49.3 | 3.2 | 12.8 | 46.6 | 110 |
| Perlite SW (Pull) | 51.9 | 0 | 3.8 | 31.9 | 102 |
| FilterPerlite 180 (Nordisk) | 47 | 0 | 0 | 12.6 | 129 |

**Table 10**

| | Particle Size Distribution (%) | | | | | | | |
|---|---|---|---|---|---|---|---|---|
| Perlite Type | 0-10µm | 10-15µm | 15-20µm | 20-40µm | 40-60µm | 60-80µm | 80-100µm | >100µm |
| Perlite 30 SP | 3.5 | 3.6 | 4.5 | 21.3 | 18.4 | 13.4 | 9.3 | 25.9 |
| Perlite MF 300 AD | 3.4 | 3.4 | 4.1 | 18.7 | 16.4 | 12.7 | 9.4 | 31.7 |
| Perlite 4108 | 7.7 | 7.2 | 8.4 | 31.5 | 19.0 | 10.1 | 5.4 | 10.7 |
| Perlite SW | 11.9 | 8.0 | 8.5 | 32.2 | 18.4 | 9.6 | 5.2 | 4.3 |
| FilterPerlite 180 | 17.7 | 12.1 | 11.8 | 32.9 | 14.1 | 5.6 | 2.2 | 3.7 |

The results of the refining process are given in Table 11 where the metal and other contaminant (P, Si) content (in ppm) of the untreated feedstock ("None") are compared with the refined feedstock treated with different types of perlite:

**Table 11**

| | P | Ca+Mg | Fe | Na | Si | Cu |
|---|---|---|---|---|---|---|
| None | 12.6 | 16.5 | 31.8 | 7.1 | 3.4 | 0.3 |
| Perlite 30 SP | 9.4 | 11.3 | 24.9 | 5.9 | 3.1 | 0.1 |
| Perlite MF 300 AD | 10.1 | 10.9 | 27.3 | 6.0 | 3.6 | 0.3 |
| Perlite 4108 | 11.5 | 12.9 | 25.8 | 7.2 | 4.2 | 0.2 |
| Perlite SW | 8.8 | 11.8 | 23.6 | 6.1 | 3.8 | 0 |
| FilterPerlite 180 | 10.9 | 15.4 | 28.8 | 6.6 | 3.6 | 0 |

The results in Table 11 demonstrate that the pure perlite types basically have no to very low metal and other contaminant removing effect on the feedstock.

Table 12 gives the results of the three-step filtration test for the different feedstock/perlite combinations tested:

**Table 12**

| | Filtration time (s) | | | |
|---|---|---|---|---|
| Perlite Type | T1 | T2 | T3 | Total |
| Perlite 30 SP | 31 | 56 | 72 | 159 |
| Perlite MF 300 AD | 25 | 39 | 52 | 116 |
| Perlite 4108 | 45 | 86 | 133 | 264 |
| Perlite SW | 40 | 77 | 117 | 234 |
| FilterPerlite 180 | 101 | 275 | 505 | 881 |

The results in Table 12 indicate that in a complex filtration experiment the filtration time of the perlites vary between different perlite types.

Conclusion from Example 4: perlites themselves show a very limited capacity to remove metals and other contaminants from the tested feedstock. Considering both physical properties and metal/contaminant removal behaviour Perlite 30 SP and Perlite MF 300 AD have been selected for further testing to check if they show a synergic effect with bleaching earths.

### Example 5

Adsorbent compositions according to the invention comprising 90% of the bleaching earth of Example 1 (Tonsil 9194 FF (Clariant)) and 10% of either of the two perlites identified as promising canditates in Example 3 (Perlite 30 SP (Nordisk); Perlite MF 300 AD (Minafil)) have been used in experiments with hard-to-treat feedstock consisting of 100% used cooking oil (UCO). This feedstock was subjected to the above-described pre-treatment (adding 0.7% of citric acid solution (20%) and 0.15% water and heating for 10 min at ambient pressure to 80 °C) and bleaching (1% adsorbent dosage and heating for 30 min at a pressure of 60 mbar to 100 °C) steps. The same feedstock/adsorbent combinations were subjected to the above 3-step filtration test. The results, both of the refining and of the filtration performance tests for the adsorbent composition of the invention (here using 90% bleaching earth and 10% perlite) were compared to those obtained with pure bleaching earth, i.e., without adding perlite.

The results of the refining process are given in Table 13 where the metal and other contaminant (P, Si) content (in ppm) of the untreated feedstock ("None") are compared with the refined feedstock treated with BE only (comparative example) and the adsorbent compositions according to the invention (i.e., mixture of BE and the two different types of perlite):

**Table 13**

| Adsorbent | P | Ca+Mg | Fe | Na | Si | Cu |
|---|---|---|---|---|---|---|
| None | 12.6 | 16.5 | 31.8 | 7.1 | 3.4 | 0.3 |
| BE only | 1.9 | 2.81 | 1.63 | < 0.5 | 1.2 | < 0.1 |
| BE plus Perlite 30 SP | 2.0 | 2.90 | 1.91 | < 0.5 | 1.6 | < 0.1 |
| BE plus Perlite MF 300 AD | 2.2 | 2.72 | 2.30 | < 0.5 | 1.3 | < 0.1 |

The results in Table 13 demonstrate that both selected perlite types show very good metal and other contaminant removal behaviour in adsorbent compositions according to the invention, although the pure perlite types basically have no to very low metal and other contaminant removing effect on the feedstock (see Example 3), confirming the results from Examples 1 and 2.

Table 14 gives the results of the three-step filtration test for the UCO feedstock/adsorbent combinations from Table 13:

**Table 14**

| | Filtration time (s) | | | |
|---|---|---|---|---|
| Adsorbent | T1 | T2 | T3 | Total |
| BE | 136 | 302 | 410 | 848 |
| BE plus Perlite 30 SP | 93 | 166 | 223 | 482 |
| BE plus Perlite MF 300 AD | 85 | 151 | 203 | 439 |

The results in Table 14 indicate that in a complex filtration experiment the filtration time of the adsorbent compositions of the invention (BU plus perlites) are substantially (i.e., 43% and 48%) lower than for BE only.

Conclusion from Example 5: As already demonstrated in Examples 1 and 2, the adsorbent compositions of the invention according to Example 4 show a remarkable and unexpected filtration performance improvement while maintaining similar metal and other contaminant (P, Si) removal performance as BE only, despite adding 10% perlite to the mixture and thus effectively reducing the available BE by 10%.

### Example 6

The experiments of Example 1 were repeated, however using a different hard-to-treat feedstock consisting of 30% crude palm oil (CPO) and 70% palm oil mill effluent (POME) and employing different BE-to-perlite ratios (98/2, 95/5, 90/10, 80/20 and 70/30, respectively). Process conditions and adsorbents used are identical to those described in Example 1.

The results of the refining process are given in Table 15 where the metal (and P) content (in ppm) of the untreated feedstock ("None") are compared with the refined feedstock treated with BE only ("BE", comparative example) and with the BE/perlite adsorbent compositions ("BE/Per") according to the invention:

**Table 15**

| | Ca | Fe | K | Mg | Mn | Si | Metals (sum Ca to Si) | P |
|---|---|---|---|---|---|---|---|---|
| None | 13.0 | 7.7 | 5.4 | 2.5 | 0.4 | 3.6 | 32.6 | 11 |
| BE | 3.2 | 3.2 | 1.50 | 1.4 | 0.20 | 1.20 | 10.7 | 4.1 |
| BE/Per 98/2 | 3.2 | 3.2 | 1.5 | 1.3 | 0.2 | 1.1 | 10.5 | 4.1 |
| BE/Per 95/5 | 3.5 | 3.4 | 1.50 | 1.5 | 0.30 | 0.5 | 10.7 | 4.2 |
| BE/Per 90/10 | 4.0 | 3.4 | 1.50 | 1.5 | 0.20 | 0.6 | 11.2 | 4.3 |
| BE/Per 80/20 | 5.3 | 4.6 | 2.8 | 1.9 | 0.30 | 1.4 | 16.3 | 6.9 |
| BE/Per 70/30 | 7.2 | 5.1 | 3.9 | 1.9 | 0.3 | 2.1 | 20.5 | 7.8 |

The results in Table 15 demonstrate that with increasing perlite content in the adsorbent composition the metal and P removing effect on feedstocks is slightly negatively affected. Up to 10% perlite content, the metal and P removing effect is practically unaffected compared to the BE only use; between 20% and 30% perlite content, the less favourable effect of perlite in the adsorbent composition both on the metal and P removal becomes more prominent.

Table 16 gives the results of the filtration rate measurements for the feedstock/adsorbent combinations tested (i.e., with BE only ("BE", comparative example) and with the BE/perlite adsorbent compositions ("BE/Per") from Table 15 according to the invention):

**Table 16**

| | Filtration rate (s) |
|---|---|
| BE | 178 |
| BE/Per 98/2 | 176 |
| BE/Per 95/5 | 137 |
| BE/Per 90/10 | 116 |
| BE/Per 80/20 | 102 |
| BE/Per 70/30 | 96 |

Table 16 shows that a positive impact of adding perlite to BE can be seen above 2% perlite content and is clearly visible with 5% perlite content. The effect becomes less prominent between 20% and 30% perlite content.

Table 17 gives the results of the three-step filtration test for the 30% CPO/70% POME feedstock/ adsorbent combinations from Table 15:

**Table 17**

| | Filtration time (s) | | | |
|---|---|---|---|---|
| Adsorbent | T1 | T2 | T3 | Total |
| BE | 188 | 316 | 294 | 798 |
| BE plus Perlite (95/5) | 124 | 227 | 185 | 536 |
| BE plus Perlite (90/10) | 77 | 134 | 140 | 351 |
| BE plus Perlite (80/20) | 63 | 112 | 119 | 294 |

The results in Table 17 indicate that also in a complex filtration experiment the filtration time of the adsorbent compositions of the invention (BU plus perlites) are substantially lower than for BE only and that the positive effect (i.e., reducing filtration time) is improving with perlite content.

Conclusion from Example 6: Increasing the perlite content in an adsorbent mixture of perlite and bleaching earth significantly reduces filtration rates for hard-to-treat feedstocks. This positive effect can also be seen in more complex filtration experiments in which the filtration time is recorded for three consecutive filtration runs in which a filter cake is built up (and which resembles real life filtration conditions in commercial operations). However, increasing the perlite content in the adsorbent composition leads to less metal and other contaminant (P) removal capacities of the adsorbent composition, which becomes more prominent with increasing perlite content. It turns out that the optimum perlite content in the adsorbent of the invention is somewhere above 2% perlite and 30% perlite, ideally between 2% and 25% and preferably between 5% and 20%.

### Example 7

To test the influence of the type of bleaching earth (BE) on the performance of the adsorbent composition also comprising perlite, a different type of BE has been mixed with perlite and has been used in refining and filtration tests like those described in Example 1. While the examples above have been carried out using an SMBE (Tonsil 9194 FF), Example 6 uses a HPBE (Tonsil 210 FF, available from Clariant) as well as a NABE (Tonsil Standard 575 available from Clariant). Table 18 summarizes the characteristics of the HPBE and NABE.

**Table 18**

| Bleaching Earth | Bulk density (g/l) | Moisture (%) | pH | Particle size > 63 µm (%) | Surface area (m²/g) |
|---|---|---|---|---|---|
| HPBE Tonsil 210 FF (Clariant) | 550 | 10-15 | 2.2-4.8 | 30 | 200 |
| NABE Tonsil 575 (Clariant) | 600 | 7-10 | 7-9 | 20 | 150 |

Refining and filtration tests have been done on a hard-to-treat feedstock comprising 20 % degummed used cooking oil (UCO), 20 % degummed animal fat, and 60 % purified fatty acid distillate (PFAD)/crude palm oil (CPO) mixture. Process conditions were as in Example 1.

The results of the refining process are given in Table 19 where the metal and other contaminant (P, Si) content (in ppm) of the untreated feedstock ("None") are compared with the refined feedstock treated with HPBE and NABE only ("HPBE", "NABE", comparative examples) and with the HPBE and NABE/perlite adsorbent compositions ("HPBE/Per" and "NABE/Per") according to the invention (for both HPBE and NABE, one composition with 95 % BE and 5 % perlite, one with 90 % BE and 10 % perlite):

**Table 19**

| | P | Al | Ca | Cu | Fe | K | Mg | Na | Ni | Si | V |
|---|---|---|---|---|---|---|---|---|---|---|---|
| None | 18.2 | 0.65 | 9.81 | <0.5 | 6.4 | 3.7 | 2.04 | 3.9 | 0.4 | 1.4 | 0.1 |
| HPBE | <2 | <0.4 | <0.5 | <0.5 | <0.4 | <0.4 | <0.5 | <0.4 | <0.4 | <0.4 | <0.1 |
| HPBE/Per (95/5) | <2 | <0.4 | <0.5 | <0.5 | <0.4 | 0.56 | <0.5 | 0.52 | <0.4 | <0.4 | <0.1 |
| HPBE/Per (90/10) | <2 | <0.4 | 0.76 | <0.5 | <0.4 | 0.86 | <0.5 | 0.58 | <0.4 | <0.4 | <0.1 |
| NABE | 8.81 | <0.4 | 3.18 | <0.5 | 3.06 | 1.61 | <0.5 | 0.96 | <0.4 | <0.4 | <0.1 |
| NABE/Per (95/5) | 8.86 | <0.4 | 3.18 | <0.5 | 3.19 | 1.59 | <0.5 | 0.99 | <0.4 | <0.4 | <0.1 |
| NABE/Per (90/10) | 9.36 | <0.4 | 3.89 | <0.5 | 3.48 | 1.91 | <0.5 | 1.29 | <0.4 | 0.6 | <0.1 |

The results in Table 19 demonstrate that also for HPBE/perlite mixtures and NABE/perlite mixtures effective metal and other contaminant removal is possible.

Table 20 gives the results of the filtration rate measurements for the feedstock/adsorbent combinations tested (i.e., with HPBE or NABE only ("HPBE", "NABE", comparative examples) and with the HPBE or NABE plus perlite adsorbent compositions ("HPBE/Perlite", "NABE/Perlite") according to the invention (each with different BE/perlite %(w/w)-ratios - as indicated)):

**Table 20**

| | HPBE (100%) | HPBE/Perlite (95%/5%) | HPBE/Perlite (90%/10%) |
|---|---|---|---|
| Filtration rate (s) | 146 | 119 | 102 |
| | NABE (100%) | NABE/Perlite (95%/5%) | NABE/Perlite (90%/10%) |
| Filtration rate (s) | 128 | 107 | 93 |

The results in Table 20 indicate that in a simple filtration experiment the filtration rate of the adsorbent composition of the invention is appr. 18 % (for the HPBE/perlite 95/5 mix) and appr. 30 % (for the HPBE/perlite 90/10 mix) faster than that for HPBE only. Similar results are observed for NABE/perlite mixtures (minus 16% for the NABE/perlite 95/5 mix and minus 27% for the NABE/perlite 95/5 mix).

Table 21 gives the results of the three-step filtration test for the feedstock/adsorbent combinations tested (i.e., with HPBE only ("HPBE", comparative example) and with the HPBE/perlite adsorbent compositions ("HPBE/Perlite") according to the invention):

**Table 21**

| | HPBE (100%) | HPBE/Perlite (95%/5%) | HPBE/Perlite (90%/10%) |
|---|---|---|---|
| T1 Filtration time (s) | 202 | 162 | 113 |
| T2 Filtration time (s) | 449 | 386 | 292 |
| T3 Filtration time (s) | 606 | 498 | 345 |
| Total filtration time (s) | 1257 | 1046 | 750 |

The results in Table 21 indicate that in a complex filtration experiment the filtration time of the adsorbent composition of the invention is substantially shorter in every step and the total filtration time is more than 16% faster (for the 95/5 mix) and more than 40 % faster (for the 90/10 mix) than that for HPBE only.

### Example 8

The adsorbent compositions of the invention comprising a mixture of bleaching earth and perlite have been compared to mixtures of bleaching earth with filter aids other than perlite and have been tested in experiments with hard-to-treat feedstock consisting of 100% palm oil mill effluent (POME).

Different types of filter aids (Perlite: Perlite 30 SP from Nordisk; Cellulose: Filtracel EFC 1400 from JRS Rettenmaier; Diatomaceous Earth (DE): Celite 503 from Imerys) have been used in a refining process similar to the one of Example 1 using 1 % (w/w) of filter aid and heating the POME/filter aid mixture for 30 min at a temperature of 100ºC and a pressure of 100 mbar. The results of the refining experiments are summarized in Table 22.

**Table 22**

| | Metals (in ppm) (Fe, Na, K, Mg, Ca & Si) | P (in ppm) |
|---|---|---|
| None | 11.8 | 7.0 |
| Perlite 30 SP | 9.3 | 6.7 |
| Filtracel EFC 1400 | 8.7 | 5.8 |
| Celite 503 | 10,1 | 6.1 |

The results in Table 22 show that none of the filter aids tested has a substantial metal and/or P removal capacity.

Table 23 gives the results of the three-step filtration test for the feedstock (100% POME)/adsorbent combinations tested (i.e., with HPBE only ("HPBE", comparative example; the HPBE used was Tonsil Optimum 210 FF from Clariant) and with the HPBE/perlite adsorbent composition ("HPBE/Perlite" using Perlite 30 SP) according to the invention (10% (w/w) perlite and 90% (w/w) HPBE) as well as comparative HPBE/filter aid mixtures (HPBE/Cellulose using Filtracel EFC 1400; HPBE/DE using Celite 503)):

**Table 23**

| | Filtration time (s) | | | |
|---|---|---|---|---|
| Adsorbent | T1 | T2 | T3 | Total |
| HPBE | 153 | 308 | 300 | 761 |
| HPBE/Perlite (90/10) | 86 | 175 | 168 | 429 |
| HPBE/Cellulose (90/10) | 119 | 188 | 174 | 481 |
| HPBE/DE (90/10) | 91 | 164 | 163 | 418 |

The data in Table 23 show that the use of filter aids (Perlite being according to the invention; Cellulose and DE representing comparative filter aids) significantly reduces the filtration time compared to the HPBE only experiment (comparative data).

Cellulose and DE representing comparative filter aids, however, have significant drawbacks when compared to the perlites according to the invention. From a practical handling perspective, DE can cause dust problems (including respirable silica release) and special care for handling such potentially hazardous materials needs to be taken in commercial operations, leading to more complex and thus more expensive processes and plants. And while perlite is comparably inexpensive (typical prices today range from 500 to 600 CHF/t), the DE used in the comparative experiments is more expensive (typical prices range today from 600 to 800 CHF/t), as is the case also for Cellulose used in the comparative experiments (typical prices today range from 1,400 to 1,700 CHF/t).

## Claims

1. Adsorbent composition comprising a mixture of bleaching earth and perlite, **characterized in that** the mixture comprises
a) from 2 to 25 % (w/w) of perlite, and
b) from 75 to 98 % (w/w) of bleaching earth.

2. Adsorbent composition of claim 1, **characterized in that** the perlite is an expanded perlite.

3. Adsorbent composition of any of the preceding claims, **characterized in that** the bleaching earth is selected from the group containing SMBE, HPBE, NABE, DMBE and mixtures thereof.

4. Use of the adsorbent composition of any one of claims 1 to 3 for improving filtration time in hard-to-treat feedstock refining processes.

5. Use of claim 4, **characterized in that** the feedstock is selected from the group containing used cooking oil (UCO), palm oil mill effluent (POME), animal fat, fatty acid distillates (FAD), spent bleaching earth oil (SBEO), tall oil and mixtures thereof.

6. Method of removing impurities from a hard-to-treat feedstock, comprising
a) providing the feedstock
b) optionally pre-heating the feedstock
c) optionally pre-treating the feedstock
d) adding the adsorbent composition of any one of claims 1 to 3 to the feedstock
e) heating the feedstock/adsorbent composition mixture
f) filtering the feedstock/adsorbent composition mixture to remove the adsorbent composition
g) collecting the purified feedstock.

7. Method according to claim 6, **characterized in that** the feedstock is selected from the group containing used cooking oil (UCO), palm oil mill effluent (POME), animal fat, fatty acid distillates (FAD), spent bleaching earth oil (SBEO), tall oil and mixtures thereof.
